# EUROPEAN PATENT SPECIFICATION

(11) **EP 2 075 173 B1**
(45) Date of publication and mention of the grant of the patent: **22.12.2010**
(21) Application number: 07124086.5
(22) Date of filing: 27.12.2007
(51) Int. Cl.: B62D 23/00, B62D 27/02

(54) **Structural member for transport vehicle chassis, and corresponding process of manufacture, chassis and vehicle**
Strukturglied für den Transport eines Fahrwerks und entsprechendes Verfahren zur Herstellung des Fahrwerks und Fahrzeugs
Élément structurel pour châssis de véhicule de transport et procédé de fabrication, châssis et véhicule correspondants

(43) Date of publication of application: 01.07.2009
(73) Proprietor: Iveco France S.A., 69200 Vénissieux (FR)
(72) Inventor: Giudice, Denis Luc Olivier, 69007 Lyon (FR)
(74) Representative: Borsano, Corrado

(56) References cited:
- WO-A-02/38434
- GB-A- 682 507

## Description

This invention relates to a structural member of a transport vehicle chassis, a process for the manufacture of such a structural member, a transport vehicle chassis provided with several such structural members, and a transport vehicle provided with such a chassis.

The invention relates to transport vehicles of all kinds whose routes include at least one station stop during which people are likely to board the vehicle and also alight from it. It relates to such a vehicle, which may or may not be driven in a dedicated lane, in particular by means of electric wires, rails or even optical means.

Transport vehicles according to the invention conventionally comprise a chassis mounted on at least one axle which is associated with wheels. This being the case, transport vehicles according to the invention are in particular buses, or trolley buses.

Normally the chassis of such a vehicle comprises several structural members in the form of a ring, which are arranged transversely. The various rings are furthermore connected to each other by means of longitudinal members.

Each ring comprises two cross-members, as well as two uprights. The upper cross-member is referred to as the "head cross-member", while that in the bottom position is known as the "chassis cross-member". The abovementioned uprights extend vertically in line with the sides of the vehicle. Means for mechanical connection are also provided between these uprights and these cross-members, and these are located at the corners, namely at intersections between the principal axes of the uprights and cross-members. In the normal way these connecting means comprise applied pieces which are secured to a corresponding upright and to a corresponding cross-member by means of welding or bolting.

From patent application WO 02/38434 A1 its known a structural member for a transport vehicle chassis which is intended to be assembled to at least one other structural member by means of longitudinal members, the structural member provided with a tubular body formed from two cross-members, several component members and two uprights, four transition zones being formed in the vicinity of the corners defined by the intersections between the principal axes of these uprights and cross-members, wherein each transition zone is tubular and it is mechanically connected or adapted to be mechanically connected, at a distance from said transition zones, to a respective upright body and/or cross-member body. Said document anticipates the features of the preamble of claim 1.

This known arrangement nevertheless has a number of disadvantages. In fact each ring-shaped member has a relatively complex structure which requires a relatively long assembly time. Furthermore, each of these structural members has proved to be relatively weak, in particular in parts where high mechanical stresses are present.

The object of the invention is to overcome these various disadvantages.

For this purpose it relates to a structural member according to appended claim 1.

It also relates to a process for manufacturing the structural member according to appended claim 2.

The invention further relates to a transport vehicle chassis according to appended claim 3.

Finally it relates to a transport vehicle according to appended claim 4.

The invention will be described below with reference to the appended drawings provided purely by way of non-restrictive examples, in which:
- Figure 1 is a perspective view illustrating a structural member according to the invention,
- Figure 2 is a perspective view similar to Figure 1 illustrating the various constituent members of the structural member in an exploded view,
- Figure 3 is a perspective view on a magnified scale more particularly illustrating a connecting part in this structural member,
- Figure 4 is a perspective view similar to Figure 2 illustrating a variant embodiment of the invention, and
- Figure 5 is a perspective view similar to Figure 2 illustrating another variant embodiment of the invention.

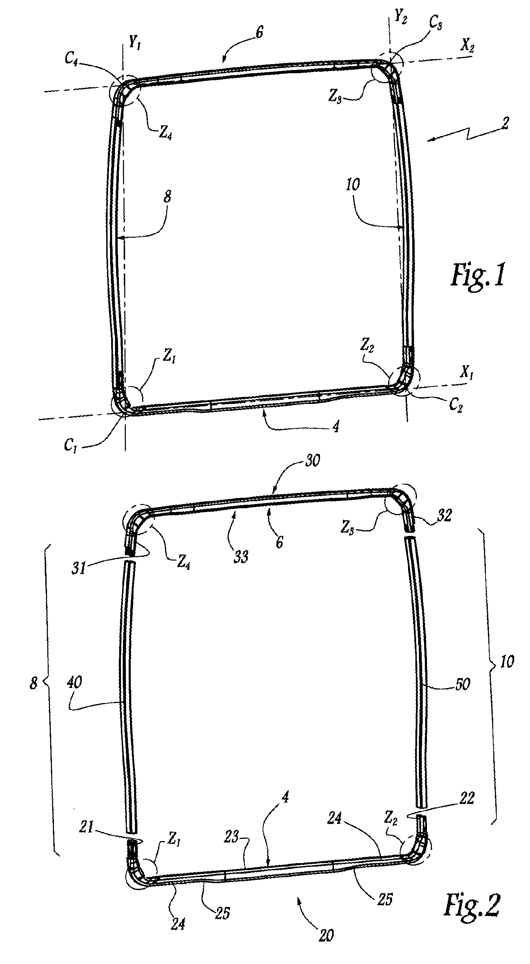

Figure 1 illustrates a structural member according to the invention which will be referred to below as a "structural ring". It is intended to be placed in a known way together with other similar rings along the chassis of a road vehicle such as a bus. These various rings arranged in this way are then connected by means of longitudinal members, also in a manner which is in itself known. These rings are of metal, being in particular manufactured from steel.

The structural ring illustrated in Figure 1 and indicated as a whole by reference 2 delimits two cross-members, namely first of all a lower cross-member 4, referred to as the chassis cross-member, and an upper cross-member 6, referred to as a head cross-member. These two cross-members are connected by two uprights, left upright 8 and right upright 10 respectively. The principal axes of these cross-members and uprights are also denoted X₁, X₂, Y₁ and Y₂.

Axes X₁ and X₂ are substantially horizontal, while Y₁ and Y₂ are substantially vertical. The corners of the ring, namely the various intersections formed by these axes, are furthermore denoted C₁ to C₄. Finally the various transition zones between a given upright and a given cross-member are denoted Z₁ to Z₄. These transition zones extend in the vicinity of the geometrical corners of the ring.

As shown in Figure 2, ring 2 as a whole comprises four members, namely first of all a lower U-shaped member 20, an upper member 30 which is also U-shaped, and two vertical tubular members 40 and 50. Member 20, which is tubular and of one piece, first of all defines lower cross-member 4 and the two lower transition zones Z₁ and Z₂. Furthermore it comprises two connecting end members 21 and 22 which extend substantially vertically, namely along the respective principal axes Y₁ and Y₂.

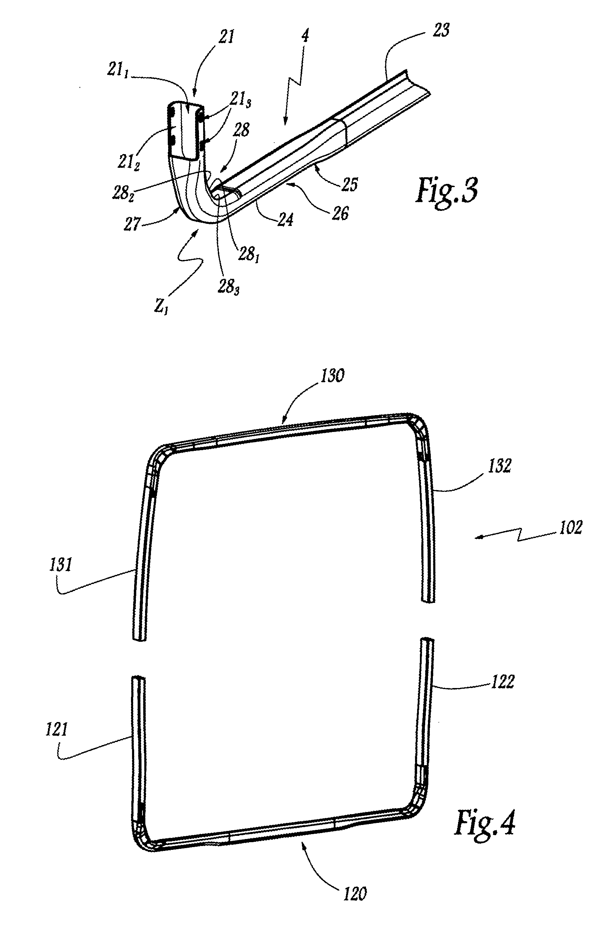

More specifically, as illustrated in particular in Figure 3, cross-member 4 comprises a central body 23 which has two lateral extremities 24 of thinner cross-section. In other words, there is an offset 25 at each of these extremities 24 which can define two passages 26 providing a route for vehicle accessories, in particular of the electrical type.

Figure 3 more particularly illustrates transition zone Z₁. When the cross-member is viewed from the front this zone Z₁ has a rounded outer profile 27, and an inner profile 28 forming a flat portion 28₁ and two bends 28₂ and 28₃ which provide the transition between the end-piece and the cross-member respectively.

Finally end-member 21 is provided with a cut-out 21₁ which thus defines an end corner 21₂ in which welding openings 21₃ are provided. It will be noted that the structure of end-member 22, which is not shown in this figure 3, is identical to that of end-member 21.

Furthermore, upper U-shaped member 30 has a structure similar to that of member 20 described below. Thus this member 30 first of all defines a body 33 of upper cross-member 6, as well as upper transition zones Z₃ and Z₄. It further comprises two end-members 31 and 32, similar to 21 and 22, with a view to forming a connection with tubes 40 and 50. Unlike lower cross-member 4, upper cross-member 6 has no offset in the example illustrated. However, in some cases this cross-member may be fitted with such offsets.

Finally, the two tubular members 40 and 50 form the bodies of uprights 8 and 10. In other words, each upright is formed of a tubular body 40 or 50 associated with a lower end-member 21 or 22 and an upper end-member 31 or 32.

Each tubular member 20, 30, 40, 50 comprising the ring of structure 2 is made of one piece, and is of entirely tubular shape. For the purpose of manufacturing each of these members a process of fluid moulding, which is in itself known, may advantageously be used. As a brief reminder, this process comprises of using a fluid under high pressure which forces the material to take up the shape of a mould. This process is advantageous in that it makes it possible to obtain parts of variable cross-section, in particular in relation to the mechanical resistance forces to which the various parts of this piece are subjected.

After various members 20, 30, 40 and 50 have been constructed separately they are assembled together, in particular by welding. For this purpose each tubular member 40 or 50 is placed against a corresponding end-member 21, 22, 31 or 32. Then welded plugs are placed in openings 21₃, with reference to Figure 3, which solidly joins the various members.

The invention is not restricted to the embodiment described and illustrated in Figures 1 to 3.

Thus Figure 4 illustrates a first variant embodiment of the invention. In this figure mechanical members which are similar to those in Figures 1 to 3 are allocated the same reference numbers increased by 100.

The first embodiment uses upright bodies 40 and 50 solidly attached to U-shaped members 20 and 30. However, as illustrated in Figure 4, it may be provided that structural ring 102 comprises two U-shaped members 120 and 130 which are solidly joined together directly. This being the case end-members 121, 122, 131 and 132 have larger dimensions than in the first embodiment. Each opposing pair of end-members, 121 and 131 and 122 and 132 respectively, is solidly attached in a manner similar to that described above, namely in particular by welding.

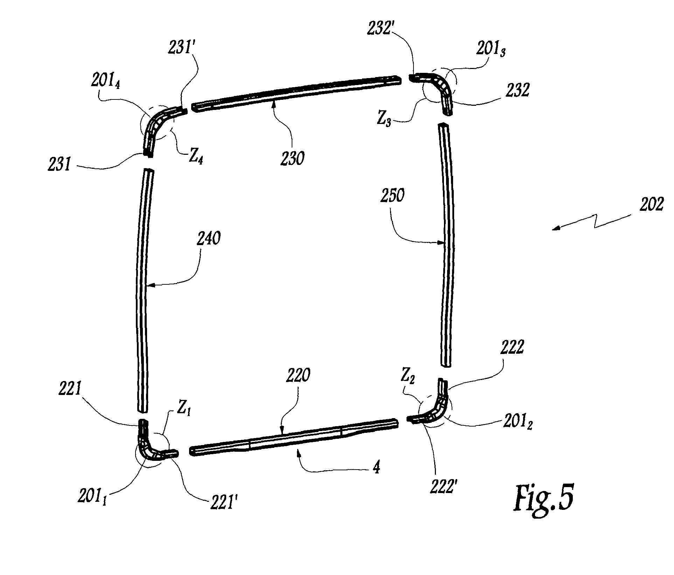

Figure 5 illustrates a second variant embodiment of the invention. In this figure mechanical members similar to those in Figures 1 to 3 are allocated the same reference numbers increased by 200.

In this variant structural ring 202 comprises four so-called "corner" members 201₁ to 201₄, each of which incorporates a tubular transition zone Z₁ to Z₄ as well as two end-members connecting to an upright body or a cross-member body. The first corner member comprises two end-members 221 and 221' which act together with an upright body 240 and a cross-member body 220, the second corner member comprises two end-members 222 and 222' which act together with an upright body 250 and a cross-member body 220, the third corner member comprises two end-members 232 and 232' which act together with upright body 250 and a cross-member body 230, while the fourth corner member comprises two end-members 231 and 231' which act together with upright body 240 and cross-member body 230.

The connection between each end-member and each upright body or cross-member body, respectively, is made in a way similar to the embodiments above. As previously, this variant in Figure 5 makes it possible to move the mechanical connecting parts away from the geometrical corner parts. Furthermore, this can be achieved through uncomplicated manufacturing equipment because the various members have a simple structure.

By way of an additional variant, not illustrated, provision may be made for the structural ring to comprise two U-shaped members, each of which incorporates an upright and two end-members belonging to a corresponding cross-member. In other words, in this alternative embodiment the two U-shaped members are located on the right and the left respectively, and not above and below as in the figures described above.

Finally, it may be envisaged that the ring assembly may be made of a single piece, formed in one operation.

The invention makes it possible to achieve the objectives previously mentioned.

Thus the fact of providing a tubular transition zone ensures a substantial increase in the stiffness of the structure as a whole. In fact the corners of the ring are regions where the highest mechanical stresses act. The ring according to the invention therefore has satisfactorily reliability in terms of strength.

Furthermore, the fact of providing a tubular transition zone made of a single piece with an upright or a cross-member makes it possible to reduce the number of constituent parts of the structural ring. This as a consequence provides a saving in time during manufacture, as well as a reduction in costs. This also makes it possible to reduce the total weight of the ring, which is accompanied by a reduction in the vehicle's fuel consumption.

Also, use of the fluid forming process has specific advantages. In fact the process makes it possible to produce sections having different cross-sections from one part to another of the tubular member in a convenient way. This being the case it is in particular possible to provide a specific profile in the transition zone, as we have seen that large stresses apply there.

## Claims

1. A structural member (202) for a transport vehicle chassis which is intended to be assembled to at least one other structural member by means of longitudinal members, the structural member comprising a tubular body formed from two cross-members (4, 6), several component members (201, 220, 230, 240, 250) and two uprights (8, 10), four transition zones (Z₁-Z₄) being formed in the vicinity of the corners (C₁-C₄) defined by the intersections between the principal axes (X₁ X₂, Y₁, Y₂) of these uprights (8, 10) and cross-members (4, 6), wherein each transition zone (Z₁-Z₄) is tubular and it is mechanically connected or adapted to be mechanically connected, at a distance from said transition zones (Z₁-Z₄), to a respective upright body (240, 250) and/or cross-member body (220, 230); the structural member (202) being **characterized in that** it comprises four tubular corner members (201₁-201₄) each of which incorporates a tubular transition zone (Z₁-Z₄) as well as two end-members (221, 221', 222, 222', 231, 231', 232, 232') connecting to a corresponding upright body (240, 250) and a cross-member body (220, 230) respectively.

2. A process for constructing the structural member according to the preceding claim in which the or each tubular member comprising the said structural member is manufactured by fluid forming.

3. A transport vehicle chassis comprising several structural members according to claim 1, together with longitudinal members connecting the various structural members together.

4. A transport vehicle, in particular a bus, comprising a chassis according to claim 1.

## Patentansprüche

1. Strukturglied für eine Transportfahrwerk, welches vorgesehen ist, um mit wenigstens einem anderen Strukturglied mittels Längsbauteilen zusammengefügt zu werden, wobei das Strukturglied einen Röhrenkörper, der aus zwei Querbauteilen (4, 6), verschiedenen Komponentenbauteilen (201, 220, 230, 240, 250) und zwei Ständern (8, 10) umfasst, wobei vier Übergangsbereiche (Z₁ - Z₄) in der Nähe der Ecken (C₁ - C₄) ausgebildet sind, die durch die Schnittpunkte zwischen den Hauptachsen (X₁, X₂, Y₁, Y₂) dieser Ständer (8, 10) und den Querbauteile (4, 6) definiert sind, wobei jeder Übergangsbereich (Z₁ - Z₄) röhrenförmig ist und er in einem Abstand von dem Übergangsbereich (Z₁ - Z₄) mit einem entsprechenden Ständerkörper (240, 250) und/oder Querbauteilkörper (220, 230) mechanisch verbunden oder eingerichtet ist, um mechanisch verbunden zu werden; wobei das Strukturglied **dadurch gekennzeichnet ist, dass** es vier Röhren-Eckbauteile (201₁ - 201₄) umfasst, von denen jedes sowohl eine röhrenförmigen Übergangsbereich (Z₁ - Z₄) als auch zwei Endbauteile (221, 221', 222, 222', 231, 231', 232, 232') enthält, die eine Verbindung mit einem entsprechenden Ständerkörper (240, 250) und/oder einem Querbauteilkörper (220, 230) herstellen.

2. Verfahren zur Errichtung des Strukturgliedes nach dem vorhergehenden Anspruch, in welchem das oder jedes Röhrenbauteil, das das Strukturglied umfasst, durch Strömungsmittelformung hergestellt wird.

3. Transportfahrwerk umfassend einige Strukturglieder nach Anspruch 1, die zusammen mit Längsbauteilen die verschiedenen Strukturglieder miteinander verbinden.

4. Transportfahrzeug, insbesondere ein Bus, umfassend ein Fahrwerk nach Anspruch 1.

## Revendications

1. Élément structurel (202) pour un châssis de véhicule de transport qui est prévu pour être assemblé sur au moins un autre élément structurel au moyen d'éléments longitudinaux, l'élément structurel comprenant un corps tubulaire formé à partir de deux traverses (4, 6), plusieurs éléments composants (201, 220, 230, 240, 250) et deux montants (8, 10), quatre zones de transition (Z₁ à Z₄) étant formées dans le voisinage des angles (C₁ à C₄) définis par les intersections entre les axes principaux (X₁, X₂, Y₁, Y₂) de ces montants (8, 10) et traverses (4, 6), dans lequel chaque zone de transition (Z₁ à Z₄) est tubulaire et elle est reliée mécaniquement, ou est adaptée pour être reliée mécaniquement, à une distance desdites zones de transition (Z₁ à Z₄), à un corps de montant respectif (240, 250) et/ou corps de traverse (220, 230) ; l'élément structurel (202) étant **caractérisé en ce qu'**il comprend quatre éléments d'angle tubulaires (201₁ à 201₄) dont chacun incorpore une zone de transition tubulaire (Z₁ à Z₄) ainsi que deux éléments d'extrémité (221, 221', 222, 222', 231, 231', 232, 232') se reliant à un corps de montant correspondant (240, 250) et un corps de traverse (220, 230), respectivement.

2. Procédé pour construire l'élément structurel selon la revendication précédente, dans lequel le ou chaque élément tubulaire comprenant ledit élément structurel est fabriqué par formage de fluide.

3. Châssis de véhicule de transport comprenant plusieurs éléments structurels selon la revendication 1, conjointement avec des éléments longitudinaux reliant les divers éléments structurels les uns aux autres.

4. Véhicule de transport, en particulier un bus, comprenant un châssis selon la revendication 1.
